# NEUE EUROPÄISCHE PATENTSCHRIFT

(11) **EP 2 425 147 B2**
(45) Veröffentlichungstag und Bekanntmachung des Hinweises auf die Entscheidung über den Einspruch: **16.11.2016**
(45) Hinweis auf die Patenterteilung: 17.04.2013
(21) Anmeldenummer: 10704806.8
(22) Anmeldetag: 15.02.2010
(51) Int. Cl.: F16F 9/05, F16F 9/38

(54) **LUFTFEDEREINRICHTUNG**
AIR SPRING DEVICE
DISPOSITIF DE RESSORT PNEUMATIQUE

(30) Priorität: 27.04.2009 DE 102009003829
(43) Veröffentlichungstag der Anmeldung: 07.03.2012
(73) Patentinhaber: Continental Teves AG & Co. OHG, 60488 Frankfurt (DE)
(72) Erfinder: OLDENETTEL, Holger, 30900 Wedemark (DE)
(74) Vertreter: Isarpatent
(86) Internationale Anmeldenummer: PCT/EP2010/051836
(87) Internationale Veröffentlichungsnummer: WO 2010/124885

(56) Entgegenhaltungen:
- EP-B1- 0 944 486
- WO-A1-2007/124923
- WO-A1-2007/124923
- DE-A1- 1 505 315
- DE-A1- 10 323 332
- DE-A1- 10 323 332
- DE-A1-102005 045 804
- DE-A1-102005 045 804
- DE-A1-102006 005 459
- DE-A1-102006 005 459
- DE-A1-102006 046 560
- DE-A1-102007 004 037
- DE-B4-102004 007 962
- JP-A- 2007 309 357
- JP-A- 2008 082 468
- JP-A- 2009 063 014
- US-A1- 2005 253 316
- US-A1- 2005 253 316

## Beschreibung

Die Erfindung betrifft eine Luftfedereinrichtung mit einem zwischen einem Luftfederdeckel und einem Luftfeder-Abrollkolben luftdicht eingespannten Luftfederbalg aus elastomerem Material, wobei der Luftfederbalg unter Ausbildung einer Rollfalte am Luftfederkolben abrollt und unter Ausbildung einer zweiten Falte am Luftfederdeckel befestigt ist, mit einer den Luftfederbalg hülsenförmig umfassenden Außenführung.

Luftfedereinrichtungen, auch kurz Luftfedern genannt, die zwischen Fahrwerk und Karosserie eingespannt sind und die einen Luftfederbalg aufweisen, der wiederum zwischen einem Luftfederdeckel und einem Abrollkolben befestigt ist, sind in eine Vielzahl von Ausführungen bekannt. Die Luftfeder steht im Betrieb unter einem inneren Überdruck. Der Luftfederbalg rollt unter Last und bei Federbewegungen unter Bildung einer Rollfalte auf der Außenkontur des konzentrischen Luftfederkolbens/Abrollkolbens ab. Eine derartige Luftfeder wird häufig in Straßen- oder Schienenfahrzeugen eingesetzt, um eine komfortable Federung zu erreichen.

Dabei existieren sowohl Luftfedern, bei denen der Luftfederbalg nur einseitig eine Rollfalte bildet, nämlich in der Regel auf dem Abrollkolben, oder Luftfedern, bei denen der Rollbalg unter Bildung einer beidseitigen (Roll-)Falte zwischen Luftfederdeckel und Abrollkolben eingespannt ist. Luftfedern mit einseitiger Rollfalte sind oft in Pkw zu finden, während die oft größeren und tragfähigeren Luftfedern mit beidseitiger Rollfalte eher in LKW und Schienenfahrzeuge eingebaut werden.

Um bei dünneren Rollbälgen eine genügende Tragfähigkeit des Gesamtsystems zu erreichen, werden die Rollbälge bzw. die Luftfedern oder -dämpfer mit so genannten Außenführungen zu versehen, nämlich mit einer den Rollbalg umgebenden rohrförmigen Hülse als "Stützkorsett" oder Stützkörper. So lässt sich beispielsweise ein dünner Rollbalg mit einer dünnen Leichtmetallhülse als Stützkörper auf hohe Innendrücke und damit hohe Tragfähigkeiten bei gleichzeitig gutem Harshness -Verhalten optimieren. Die Außenführungen sind dabei so ausgebildet und angeordnet, dass der Rollbalg einerseits an der Außenseite des Abrollkolbens und andererseits an der Innenoberfläche der Außenführung abrollen kann.

Insbesondere dann, wenn Luftfedern im Fahrwerksbereich von Fahrzeugen angeordnet sind, werden oft Faltenbälge eingesetzt, die die Luftfeder teilweise umgeben und mit denen z.B. die gegenüber Verschmutzungen empfindliche Rollfalte geschützt wird. Fremdkörper, wie etwa kleine hochgeschleuderte Steine oder Teerstücke aus dem Straßenbelag, können die Gummihaut der Rollbalgfalte nämlich erheblich schädigen und die Lebensdauer verringern.

Der Einsatz solcher Faltenbälge birgt keine besonderen Probleme, solange bei relativ großzügigen Bauhöhen Luftfedern mit integrierten und koaxial angeordneten Dämpfern verwendet werden können und für die Luftfeder die übliche Einbaulage vorgesehen ist, bei sich der nämlich der Luftfederdeckel oben und der Abrollkolben unten befinden. Dabei zeigt die Rollfalte "nach unten". Ein Faltenbalg kann dann leicht am unteren Ende der als Außenführung dienenden Hülse und nach unten hin am Dämpfer befestigt werden. Eine solche Befestigung am Dämpfer erlaubt eine ausreichende und die Elastizität des Faltenbalges nicht überdehnende "Arbeitslänge".

Aufgrund des vorhandenen geringen Bauraumes bei modernen Fahrzeugen ist es jedoch oft nötig, Luftfedern ohne integrierte Dämpfer in Über-Kopf-Lage einzubauen. Die Dämpfer werden dann z.B. separat neben der Luftfeder eingebaut, was die "Bauhöhe" des Fahrwerks natürlich erheblich reduzieren kann. Bei dieser auch unter dem Begriff "upside-down-Einbau" bekannten Einbaulage stützt sich der Abrollkolben - nach oben gelegen - an der Karosserie ab, während der Luftfederdeckel unten auf z.B. einem Querlenker einer Achse aufliegt. In dieser Einbaulage ist die Rollfalte nach oben gerichtet und es bildet sich zwischen Außenführung und Abrollkolben ein Ringspalt, also eine ringförmige "Tasche", die unbedingt durch einen Faltenbalg verschlossen werden muss, da sich sonst sofort Fremdkörper in dieser Tasche sammeln und nicht wieder durch die Schwerkraft herausfallen können.

Eine derartige, gattungsgemäße Luftfeder ist beispielsweise aus der DE 10 2006 005 459 A1 bekannt. Allerdings verbietet sich nun aufgrund der geringen Bauhöhe die bei der üblichen Einbaulage bewährte Befestigung des Faltenbalges zwischen Außenführung und Dämpfer, da der Dämpfer ja nun neben der Luftfeder angebracht ist. Eine ausreichende und die Elastizität des Faltenbalges nicht überdehnende "Arbeitslänge" steht hier also nicht zur Verfügung.

Weiter beschreibt die DE 10 2005 045 804 A1 eine Luftfeder mit einer einseitigen Rollfalte, bei welcher ein Faltenbalg an dem der Rollfalte gegenüberliegenden Ende des Abrollkolbens sowie an einem Stützring, der eine den Balg befestigende Manschettenanordnung umgibt, befestigt ist.

Aufgabe der Erfindung war es nun, für eine solche in Über-Kopf-Lage eingebaute Luftfeder eine Anordnung und Befestigung eines Faltenbalges bereitzustellen, mit der ein zuverlässiger Schutz gegen Verschmutzung erreicht werden kann und die durch die Bereitstellung einer ausreichenden Arbeitslänge für den Faltenbalg letzterem eine sichere Funktion und lange Lebensdauer gewährt.

Gelöst wird diese Aufgabe durch die Merkmale des Hauptanspruchs. Weitere vorteilhafte Ausbildungen sind in den Unteransprüchen offenbart.

Dadurch dass der Faltenbalg einerseits am Ende des Abrollkolbens und andererseits an der Außenführung befestigt ist, ergibt sich eine sichere Fixierung über die Länge des Faltenbalges.

Eine vorteilhafte und besonders einfache zu montierende Ausbildung der Befestigung besteht darin, dass der Faltenbalg am Ende des Abrollkolbens eine gegen Verunreinigungen dichtende Befestigung aufweist, z. B. eine Schraub- oder Quetschschelle, die sicher gegen eindringendes Wasser oder gegen eindringenden Schmutz dichtet.

Bei einem die Außenführung über im Wesentlichen ihre gesamte Länge umgebenden Faltenbalg ist es vorteilhaft, dass der Faltenbalg am dem Ende oder in der Nähe des Endes der Außenführung befestigt ist, welches dem Luftfederdeckel zugewandt ist.

Eine weitere vorteilhafte Ausbildung besteht darin, dass der Faltenbalg an der Außenführung eine Befestigung aufweist, die eine Belüftung des vom Faltenbalg umgebenen Raumes erlaubt. Damit kann ein Aufblähen oder Kollabieren des nun doch relativ langen Faltenbalges sicher vermieden werden.

Besonders sicher und einfach herzustellende und damit vorteilhafte Ausbildung einer solchen Belüftung und Befestigung an der Außenführung bestehen darin, dass der Faltenbalg an einem nach außen ragenden Kragen oder Vorsprung der Außenführung befestigt ist und der Kragen oder Vorsprung Lüftungsbohrungen aufweist, oder dass der Kragen oder Vorsprung über den Umfang Unterbrechungen oder Ausnehmungen, so genannte "Taschen" aufweist.

Erfindungsgemäß ist der Faltenbalg im Bereich der Außenführung mindestens einen zylindrischen Abschnitt ohne Falten aufweist. Ein solcher zylindrischer Abschnitt übernimmt dann eine gewisse Führung des Faltenbalges auf der Außenführung (Hülse), wodurch verhindert wird, dass beim Einfedern die Enden der Außenführung gegen die Innenseite der Falten laufen. Dies kann nämlich insbesondere dann auftreten, wenn die Außenführung aufgrund der Achskinematik auch zu seitlichen Bewegungen bzw. zu seitlichem Versatz gezwungen ist.

Vorteilhafterweise weist der zylindrische Abschnitt des Faltenbalgs dann einen geringfügig größeren Durchmesser als die Außenführung auf, d.h. einen geringfügig größeren Innendurchmesser als der Außendurchmesser der Außenführung.

Weiter erfindungsgemäß erstreckt sich der Faltenbalg bis zum Luftfederdeckel. Damit bietet sich eine kostengünstige Möglichkeit, auch den unteren Bereich des Luftfederbalges vor Verschmutzungen zu schützen. Soweit ein vollständige Kapselung gewünscht ist, ist es dabei vorteilhaft, wenn der Faltenbalg am Luftfederdeckel "schmutz- und wasserdicht" befestigt ist, ggf. unter Bereitstellung einer weiteren Belüftung.

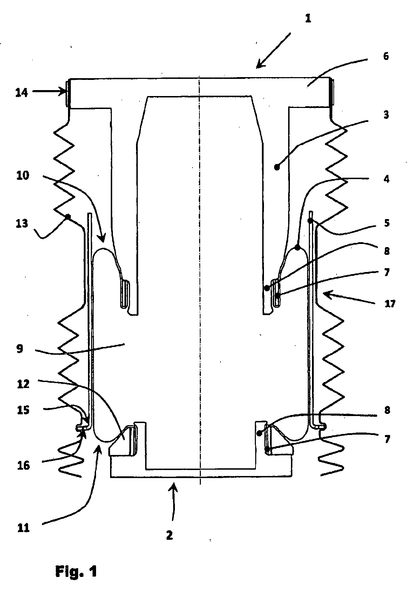

Die einzige Figur zeigt eine erfindungsgemäße Luftfedereinrichtung 1 in "Über-Kopf-Lage, die hier einen unten angeordneten Luftfederdeckel 2, einen im oberen Teil angeordneten Luftfederkolben 3 und einen Luftfederbalg 4 aufweist. Der Luftfederbalg 4 ist von einer hülsenförmigen Außenführung 5 umschlossen. Der Luftfederkolben weist ein oberes Anschlussteil 6 auf zur Anbindung z. B. an eine Karosserie.

Der Luftfederbalg 4 ist mit Klemmringen 7 jeweils auf Klemmsitzen 8 des Luftfederkolbens 3 und des Luftfederdeckels 2 luftdicht verpresst und bildet zwischen Luftfederkolben 3 und Luftfederdeckel 2 den Arbeitsraum 9 als volumenelastischen Hohlraum, der mit einem Überdruck beaufschlagbar ist. Dieser Überdruck sorgt dafür, dass der Luftfederbalg 4 eine Rollfalte 10 und eine weitere Falte 11 bildet. Die Rollfalte 10 rollt bei axialen Relativbewegungen von Luftfederkolben 3 und Luftfederdeckel 2 auf dem Außenumfang des Luftfederkolbens ab. Bei der Falte 11 wird ein Abrollen am Luftfederdeckel durch eine entsprechende Formgebung des Deckels minimiert bzw. ganz verhindert. Dazu ist der Luftfederbalg 4 deckelseitig durch einen Formring 12 gestützt, so dass er nicht oder nicht zu stark über den Luftfederdeckel 2 abrollt. Der Überdruck im Arbeitsraum 9 presst außerdem den Luftfederbalg 4 von Innen gegen die Außenführung 5.

Der Luftfederbalg 4 wird dadurch gestützt, so dass seine radiale Ausdehnung das durch die Außenführung 5 vorgegebene und die Federcharakteristik erheblich bestimmende Maß nicht überschreitet.

Die Luftfeder ist mit einem Faltenbalg 13 versehen, welcher die Rollfalte 10 vor Verschmutzungen schützt. Der Faltenbalg 13 ist an dem der Rollfalte 10 gegenüberliegenden Ende des Abrollkolbens 3 mit einer gegen Verunreinigungen dichtenden Quetschschelle 14 befestigt, umgibt die Außenführung 5 um ihre gesamte Länge und geht noch darüber hinaus, erstreckt sich nämlich bis zum Ende des Luftfederdeckels 2.

Der Faltenbalg 13 ist zusätzlich über einen nach außen ragenden Kragen 15 der Außenführung 5 an letzterer befestigt. Der Kragen 15 weist Lüftungsbohrungen 16 auf.

Der Faltenbalg 13 weist im Bereich der Außenführung 5 einen zylindrischen Abschnitt 17 ohne Falten auf, der eine gewisse Führung des Faltenbalges 13 auf der Außenführung 5 übernimmt. Der Innendurchmesser des Faltenbalges in dem zylindrischen Abschnitt ist geringfügig größer als der Außendurchmesser der Außenführung 5.

### Bezugszeichenliste

### (Teil der Beschreibung)

- 1: Luftfedereinrichtung
- 2: Luftfederdeckel
- 3: Luftfederkolben
- 4: Luftfederbalg
- 5: Außenführung
- 6: Anschussteil
- 7: Klemmring
- 8: Klemmsitz
- 9: Arbeitsraum
- 10: Rollfalte
- 11: Falte
- 12: Formring
- 13: Faltenbalg
- 14: Quetschschelle
- 15: Kragen
- 16: Lüftungsbohrung
- 17: Zylindrischer Abschnitt

## Patentansprüche

1. Luftfedereinrichtung (1) in Über-Kopf Lage mit einem zwischen einem Luftfederdeckel (2) und einem Luftfeder-Abrollkolben (3) luftdicht eingespannten Luftfederbalg (4) aus elastomerem Material, wobei der Luftfederbalg (4) unter Ausbildung einer nach oben gerichteten Rollfalte (10) am Luftfeder-Abrollkolben (3) abrollt und unter Ausbildung einer zweiten Falte (11) am Luftfederdeckel (2) befestigt ist, mit einer den Luftfederbalg (4) hülsenförmig umfassenden Außenführung (5), wobei ein Faltenbalg (13), welcher die nach oben gerichtete Rollfalte (10) vor Verschmutzungen schützt, an dem der Rollfalte (10) gegenüberliegenden Ende des Luftfeder-Abrollkolbens (3) und an dem Ende der Außenführung (5), welche dem Luftfederdeckel (2) zugewandt ist, befestigt ist, wobei der Faltenbalg (13) einen Abschnitt umfasst, der vom Luftfeder-Abrollkolben (3) weg die Außenführung (5) um ihre gesamte Länge umgibt und sich darüber hinaus zum Ende des Luftfederdeckels (2) erstreckt, wobei der Faltenbalg (13) an dem Luftfederdeckel (2) befestigt ist, wobei der Faltenbalg (13) im Bereich der Außenführung (5) mindestens einen zylindrischen Abschnitt (17) ohne Falten aufweist, der eine Führung des Faltenbalges (13) auf der Außenführung (5) übernimmt, wodurch verhindert wird, dass beim Einfedern die Enden der Außenführung (5) gegen die Innenseiten der Falten laufen, wenn die Außenführung (5) aufgrund der Achskinematik auch zu seitlichen Bewegungen gezwungen ist, bei der der Faltenbalg (13) an einem nach außen ragenden Kragen oder Vorsprung (15) der Außenführung (5) befestigt ist und der Kragen oder Vorsprung (15) Lüftungsbohrungen (16) aufweist.

2. Luftfedereinrichtung nach Anspruch 1, bei der der Faltenbalg (13) am Ende des Abrollkolbens (3) eine gegen Verunreinigungen dichtende Befestigung (14) aufweist.

3. Luftfedereinrichtung nach einem der Ansprüche 1 bis 2, bei der der Faltenbalg (13) an der Außenführung (5) eine Befestigung aufweist, die eine Belüftung des vom Faltenbalg (13) umgebenen Raumes erlaubt.

4. Luftfedereinrichtung nach einem der Ansprüche 1 bis 3, bei der der Faltenbalg (13) an einem nach außen ragenden Kragen oder Vorsprung (15) der Außenführung (5) befestigt ist und der Kragen oder Vorsprung (15) über den Umfang Unterbrechungen oder Ausnehmungen aufweist.

5. Luftfedereinrichtung nach einem der Ansprüche 1 bis 4, bei der der zylindrische Abschnitt (17) des Faltenbalgs (13) einen geringfügig größeren Durchmesser als die Außenführung (5) aufweist.

## Claims

1. Air spring device (1) in the overhead position having an air spring bellows (4) which is made from elastomeric material and is clamped in an airtight manner between an air spring cover (2) and an air spring rolling piston (3), the air spring bellows (4) rolling on the air spring rolling piston (3) with the formation of a rolling fold (10) which is directed upward and being fastened to the air spring cover (2) with the formation of a second fold (11), having an outer guide (5) which encloses the air spring bellows (4) in a sleeve-shaped manner, wherein a folding bellows (13) which protects the rolling fold (10) which is directed upward against contaminants is fastened to that end of the air spring rolling piston (3) which lies opposite the rolling fold (10) and to that end of the outer guide (5) which faces the air spring cover (2),
wherein the folding bellows (13) comprises a section which, away from the air spring rolling piston (3), surrounds the outer guide (5) about its entire length and, moreover, extends to the end of the air spring cover (2), wherein the folding bellows (13) is fastened to the air spring cover (2), wherein the folding bellows (13), in the region of the outer guide (5), has at least one cylindrical section (17) without folds, which takes over guidance of the folding bellows (13) on the outer guide (5), which prevents the ends of the outer guide (5) running against the inner sides of the folds during compression if the outer guide (5) is also forced into lateral movements on account of the axle kinematics, in which the folding bellows (13) is fastened to an outwardly protruding collar or projection (15) of the outer guide (5), and the collar or projection (15) has ventilating holes (16).

2. Air spring device according to Claim 1, in which the folding bellows (13) has a fastening (14) which seals against contaminants at the end of the rolling piston (3).

3. Air spring device according to either of Claims 1 and 2, in which the folding bellows (13) has a fastening on the outer guide (5), which fastening permits ventilation of the space which is surrounded by the folding bellows (13).

4. Air spring device according to one of Claims 1 to 3, in which the folding bellows (13) is fastened to an outwardly protruding collar or projection (15) of the outer guide (5), and the collar or projection (15) has interruptions or recesses over the circumference.

5. Air spring device according to one of Claims 1 to 4, in which the cylindrical section (17) of the folding bellows (13) has a slightly larger diameter than the outer guide (5).

## Revendications

1. Dispositif de ressort pneumatique (1) en position renversée comprenant un soufflet de ressort pneumatique (4) en matériau élastomère serré de manière étanche à l'air entre un couvercle de ressort pneumatique (2) et un piston de déroulage de ressort pneumatique (3), le soufflet de ressort pneumatique (4) roulant sur le piston déroulant de ressort pneumatique (3) en formant un pli roulant (10) orienté vers le haut et étant fixé au couvercle de ressort pneumatique (2) en formant un deuxième pli (11), et comprenant un guide extérieur (5) entourant le soufflet de ressort pneumatique (4) à la manière d'une douille, un soufflet (13), qui protège le pli roulant (10) orienté vers le haut contre les salissures, étant fixé à l'extrémité du piston déroulant de ressort pneumatique (3) qui est opposée au pli roulant (10) et étant fixé à l'extrémité du guide extérieur (5) qui est tournée vers le couvercle de ressort pneumatique (2), dans lequel le soufflet (13) comprend une section qui entoure le guide extérieur (5) sur toute sa longueur de manière espacée du piston de déroulage de ressort pneumatique (3) et qui s'étend jusqu'à l'extrémité du couvercle de ressort pneumatique (2),
dans lequel le soufflet (13) est fixé au couvercle de ressort pneumatique (2), dans lequel le soufflet (13) comprend au moins une section cylindrique (17) sans pli dans la région du guide extérieur (5), qui assure un guidage du soufflet (13) sur le guide extérieur (5), cela permettant d'éviter que, lors de leur enfoncement, les extrémités du guide extérieur (5) se déplacent contre les faces internes des plis lorsque le guide extérieur (5) est également contraint d'effectuer des mouvements latéraux du fait de la cinématique axiale, lors duquel le soufflet (13) est fixé à un rebord ou une saillie (15) vers l'extérieur, du guide extérieur (5) et le rebord ou la saillie (15) comprend des trous d'aération (16) .

2. Dispositif de ressort pneumatique selon la revendication 1, dans lequel le soufflet (13) comprend, à l'extrémité du piston déroulant (3), une fixation (14) étanche vis-à-vis des impuretés.

3. Dispositif de ressort pneumatique selon l'une quelconque des revendications 1 à 2, **caractérisé en ce que** le soufflet (13) comprend, au niveau du guide extérieur (5), une fixation qui permet une aération de l'espace entouré par le soufflet (13).

4. Dispositif de ressort pneumatique selon l'une quelconque des revendications 1 à 3, dans lequel le soufflet (13) est fixé à un rebord ou une saillie (15), faisant saillie vers l'extérieur, du guide extérieur (5) et le rebord ou la saillie (15) présente des interruptions ou évidements sur la périphérie.

5. Dispositif de ressort pneumatique selon l'une quelconque des revendications 1 à 4, dans lequel la section cylindrique (17) du soufflet (13) présente un diamètre légèrement plus grand que celui du guide extérieur (5).
